# EUROPÄISCHE PATENTSCHRIFT

(11) **EP 3 850 166 B1**
(45) Veröffentlichungstag und Bekanntmachung des Hinweises auf die Patenterteilung: **16.03.2022**
(21) Anmeldenummer: 19765407.2
(22) Anmeldetag: 03.09.2019
(51) Int. Cl.: E04B 1/26

(54) **BAUWERK UND VERFAHREN ZU DESSEN HERSTELLUNG**
STRUCTURE AND METHOD FOR PRODUCING SAME
OUVRAGE ET PROCÉDÉ DE FABRICATION DE CELUI-CI

(30) Priorität: 13.09.2018 AT 601452018
(43) Veröffentlichungstag der Anmeldung: 21.07.2021
(73) Patentinhaber: Zech, Leslie P.C., 1090 Wien (AT)
(72) Erfinder: Zech, Leslie P.C., 1090 Wien (AT)
(74) Vertreter: Babeluk, Michael
(86) Internationale Anmeldenummer: PCT/AT2019/060286
(87) Internationale Veröffentlichungsnummer: WO 2020/051606

(56) Entgegenhaltungen:
- EP-A1- 1 785 535
- EP-B1- 0 866 186
- FR-A1- 2 605 340
- GB-A- 588 905

## Beschreibung

Die vorliegende Erfindung betrifft ein Bauwerk, bestehend aus modular zusammensetzbaren Bauteilen gemäß dem Oberbegriff von Patentanspruch 1.

Bauwerke dieser Art sind transportabel und in verschiedenen Konfigurationen aufbaubar, um eine möglichst große Flexibilität zu ermöglichen. Beispielsweise werden Messestände oder andere temporär verwendbare Strukturen in dieser Weise hergestellt. In diesem Zusammenhang hat es sich bewährt, zur Verbindung von Bauteilen sogenannte Schlüssellochverbindungen zu verwenden, das sind lösbare Verbindungen, bei denen ein Bauteil ein oder mehrere pilzförmige Eingriffselemente aufweist, die mit einem oder mehreren schlüssellochförmigen Aufnahmeelementen zusammenwirken. Diese besitzen eine Ausnehmung, die aus einer zumeist kreisförmigen Öffnung mit einem länglichen Fortsatz besteht, der seitlich hinterschnitten ist. Beim Zusammenbau wird dabei das Eingriffselement des einen Bauteils mit seinem Kopf durch die Öffnung des anderen Bauteils gesteckt und daraufhin entlang dem länglichen Fortsatz der Ausnehmung vorgeschoben. Dadurch rastet das Eingriffselement in der Hinterschneidung ein und kann auf diese Weise Zugkräfte und Querkräfte rechtwinklig zur Richtung des Fortsatzes übertragen.

Auf diese Weise ist es möglich, Möbel, Messestände oder zerlegbare Bauwerke in einfacher Weise zusammenzubauen und auch leicht wieder zu zerlegen, sobald dies erforderlich ist. Solche Lösungen zur lösbaren Verbindung von Bauteilen sind beispielsweise in der EP 1 835 184 B oder in der AT 505 626 B beschrieben.

Die auf diese Weise entstehende Verbindung ist bei entsprechender Dimensionierung der Bauteile zwar relativ robust, es ist jedoch stets zu beachten, dass die Verbindung durch Anwenden einer Kraft parallel zum länglichen Fortsatz stets gelöst werden kann. Treten bei der gewöhnlichen Verwendung des so zusammengefügten Gegenstands solche Kräfte auf, ist eine zusätzliche Sicherung durch Schrauben oder dergleichen erforderlich, was den Vorteil des einfachen Aufbaus und der Möglichkeit, Verbindung ohne besondere Werkzeuge herzustellen, zunichtemacht.

Ein weiteres bestehendes Problem besteht darin, bei vorwiegend aus Holz bestehenden Bauteilen eine sichere und zuverlässige Verbindung der Beschläge mit dem Grundmaterial zu gewährleisten, um entsprechende Kräfte und Momente übertragen zu können. Wenn daher entsprechend große Kräfte und Momente zu erwarten sind, müssen groß dimensionierte Beschläge eingesetzt werden, die das ästhetische Erscheinungsbild häufig beeinträchtigen.

Aus der EP 866 186 B sind Beschläge bekannt, bei denen pilzförmige Eingriffselemente mit schlüssellochförmigen Aufnahmeelemente in Eingriff gebracht werden können. Ein Problem dabei besteht darin, eine ausreichend tragfähige Verbindung der Halteplatte mit dem Grundmaterial der Balken oder Steher herzustellen. Andererseits soll eine formschöne und ästhetisch ansprechende Lösung geschaffen werden, die leicht herstellbar ist.

In der GB 588,905 A ist ein Fertigteilbauwerk beschrieben, dessen Wandelemente durch versenkt angeordnete Halteplatten miteinander verbunden sind. Damit ist ein einfacher Zusammenbau möglich, allerdings ist die Vorbereitung der Bauteile aufwändig.

Aufgabe der Erfindung ist es, diese Nachteile zu vermeiden und eine Lösung anzugeben, bei der die grundsätzlichen Vorteile der Verbindung erhalten bleiben, ohne zusätzliche Sicherungsmaßnahmen vorsehen zu müssen. Gleichzeitig soll auch bei entsprechend robuster Ausführung ein ansprechendes optisches Erscheinungsbild gewährleistet werden. Eine effiziente Herstellung der Bauteile soll ebenfalls gewährleistet sein.

Erfindungsgemäß werden diese Aufgaben durch die Merkmale von Patentanspruch 1 gelöst.

Durch die versenkte Anordnung der Halteplatten in den Stehern und Balken wird einerseits ein ansprechendes Erscheinungsbild gewährleistet, da die Beschläge in zusammengebautem Zustand ganz oder zumindest überwiegend verdeckt sind. Andererseits können Kräfte und Momente auf die Halteplatten nicht nur durch entsprechende Schrauben, sondern auch durch die Abstützung an den Stirnflächen der Platten übertragen werden, so dass es möglich ist, die Halteplatten kleiner auszuführen als dies sonst möglich wäre.

Ein wesentlicher Aspekt der Erfindung ist, dass die Steher und/oder die Balken an Seitenflächen Längsnuten aufweisen. Die Längsnuten haben dabei nicht nur eine ästhetische Funktion in dem Sinn, die Balken und Steher schlanker erscheinen zu lassen, sondern ermöglichen auch eine vereinfachte und kostengünstige Herstellung der Bauteile, da das Fräsen der Aufnahme für die Halteplatte wesentlich erleichtert wird. Weil die Längsnuten eine Tiefe aufweisen, die der Dicke der Halteplatte entspricht, können die Längsnuten gemeinsam mit der Aufnahme für die Halteplatte beispielsweise in einem Fräsvorgang hergestellt werden, wobei es nicht erforderlich ist, eine Bohrung für das Einführen des Fräsers herzustellen.

Als besonders günstig hat es sich herausgestellt, wenn an einer Halteplatte vier Eingriffselemente in rechteckiger Anordnung vorgesehen sind. Auf diese Weise wird insbesondere der Zusammenbau erleichtert, da die zu verbindenden Bauteile bereits lagerichtig zusammengefügt werden müssen, um überhaupt eine Verbindung zu ermöglichen. Auch wenn ein Bauteil nur um einen relativ geringen Winkel aus der vorgesehenen Lage verschwenkt ist, ist ein Einführen der Eingriffselemente in die Öffnungen nicht möglich. Eine rechteckige, aber nicht quadratische Anordnung ergibt den Zusatzvorteil, dass auch eine um 90° verdrehte Anordnung keine Verbindung ermöglicht, so dass ein fehlerhafter Zusammenbau ausgeschlossen ist.

In einer ersten begünstigten Ausführungsvariante der Erfindung ist vorgesehen, dass an dem Steher eine Halteplatte mit Eingriffselementen und an dem Balken eine Halteplatte mit Aufnahmeelementen angebracht ist, wobei die Aufnahmeelemente in Gebrauchsstellung umgekehrt schlüssellochförmig orientiert sind. Umgekehrt schlüssellochförmig bedeutet in diesem Zusammenhang, dass der Fortsatz im Wesentlichen nach oben orientiert ist, wenn das Bauwerk zusammengebaut ist und sich in der für den Gebrauch vorgesehenen Lage befindet. Typischerweise ist dabei der Steher der Bauteil, der Kräfte aufnimmt und insbesondere den Balken trägt. Beim Zusammenbau muss der Balken in leicht erhöhter Lage an den Steher angelegt werden, so dass die Eingriffselemente des Stehers in die Aufnahmeelemente des Balkens eingeführt werden können. Danach wird der Balken in seine gewünschte Position abgesenkt, so dass die Eingriffselemente durch die Fortsätze festgelegt werden. Die Verbindung wird dabei durch das Eigengewicht des Balkens gesichert.

Alternativ dazu kann aus der gleichen Überlegung beruhend vorgesehen sein, dass an dem Steher eine Halteplatte mit Aufnahmeelementen und an dem Balken eine Halteplatte mit Eingriffselementen angebracht ist, wobei die Aufnahmeelemente in Gebrauchsstellung schlüssellochförmig orientiert sind. Die Fortsätze sind dabei nach Art eines herkömmlichen Schlüssellochs nach unten orientiert, so dass auch in diesem Fall das Eigengewicht des Balkens die Verbindung sichert.

Besonders robust kann die Verbindung dadurch hergestellt werden, dass die Halteplatte allseitig am Grundmaterial des Stehers bzw. Balkens anliegt. Dadurch können insbesondere Torsionsmomente um eine Achse senkrecht zur Ebene der Halteplatte besonders wirksam abgeleitet werden.

Die vorliegenden Erfindung betrifft auch ein Verfahren zur Herstellung eines Bauwerks, bei dem Balken und Steher durch Einrasten von Verbindungsbeschlägen miteinander verbunden werden gemäß Patentanspruch 7.

Wesentlich dabei ist, dass eine rahmenartige Konstruktion schnell und sicher aufgerichtet werden kann, die formschön ausgestaltet ist.

Dies wird erfindungsgemäß dadurch erreicht, dass zunächst ein Steher bereitgestellt wird, an den ein Balken in leicht erhöhter Lage an den Steher angelegt werden, wonach die Eingriffselemente des Stehers in die Aufnahmeelemente des Balkens eingeführt werden, wonach der Balken in seine gewünschte Position abgesenkt wird, so dass die Eingriffselemente durch die Fortsätze festgelegt werden. Dadurch wird die Verbindung der Bauteile im Wesentlichen durch die Gewichtskraft der Bauteile gesichert. Nach und nach können weitere Steher und Balken in der gleichen Weise eingefügt werden, um das Bauwerk fertigzustellen.

In einer bevorzugten Variante des erfindungsgemäßen Verfahrens weisen die Balken und die Steher an ihren Seitenflächen Längsnuten mit einer Tiefe auf, die der Dicke der Halteplatte entspricht, und dass die Balken und Steher so zusammengefügt werden, dass ihre Längsnuten aneinander anschließen. Auf diese Weise kann eine besonders formschöne und funktionelle Konstruktion erhalten werden.

Insbesondere können dabei in die Längsnuten Leitungen und/oder Lichtelemente verlegt werden, die dazu geeignet sind, das Bauwerk entsprechend in Szene zu setzen. In den Längsnuten sind diese Elemente formschön integriert.

In der Folge wird die vorliegende Erfindung anhand der in den Figuren dargestellten Ausführungsbeispiele näher erläutert. Es zeigen:
- Fig. 1: einen Balken in einer teilweisen seitlichen Ansicht;
- Fig. 1a: den Balken von Fig. 1 in einer Ansicht von unten in vergrößertem Maßstab;
- Fig. 2: einen Steher in einer teilweisen seitlichen Ansicht;
- Fig. 3: einen ersten Verbindungsbeschlag in einer Draufsicht;
- Fig. 4: den Verbindungsbeschlag von Fig. 3 in einer seitlichen Ansicht;
- Fig. 5: einen zweiten Verbindungsbeschlag in einer Draufsicht; und
- Fig. 6: den Verbindungsbeschlag von Fig. 5 in einer seitlichen Ansicht.

Ein erfindungsgemäßes Bauwerk ist typischerweise in Skelettbauweise hergestellt und besteht hauptsächlich aus Balken 1 und Stehern 2. Als Balken 1 werden die in zusammengebautem Zustand waagerechten Teile und als Steher 2 senkrechten Teile des Bauwerks verstanden.

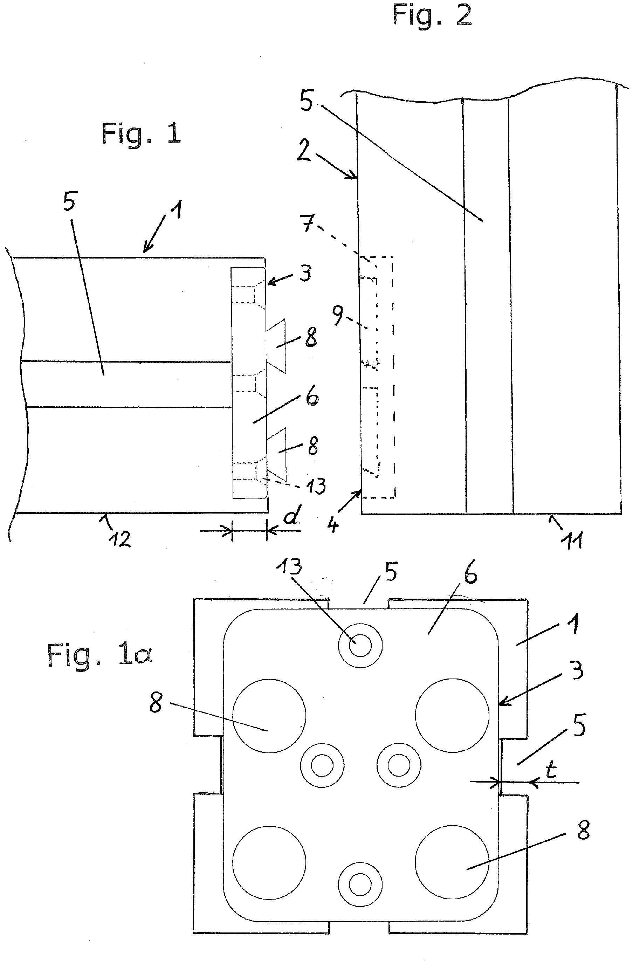

Fig. 1 zeigt teilweise einen Balken 1, der aus Holz hergestellt ist und einen quadratischen Querschnitt besitzt. In der Mitte jeder der Seitenflächen des Balkens 1 ist eine in Längsrichtung verlaufende Nut 5 vorgesehen. Diese dient einerseits zur Verbesserung des optischen Erscheinungsbilds und andererseits auch dazu, gegebenenfalls Kabel oder dergleichen aufnehmen zu können. An der Stirnseite des Balkens 1 ist ein Verbindungsbeschlag 3 versenkt angeordnet.

Fig. 1a zeigt eine Draufsicht auf die Stirnfläche des Balkens 1, woraus ersichtlich ist, dass der Verbindungsbeschlag 3 rechteckig und etwas kleiner ist als die Querschnittsfläche des Balkens 1. Dadurch ist es möglich, dass der Verbindungsbeschlag 3 allseitig von Grundmaterial des Balkens 1 umgeben ist, abgesehen von den Nuten 5. Auf diese Weise kann eine großteils formschlüssige Verbindung zwischen dem Verbindungsbeschlag 3 und dem restlichen Balken 1 hergestellt werden, was im Hinblick auf die Belastbarkeit besonders vorteilhaft ist.

Analog dazu zeigt Fig. 2 den unteren Abschnitt eines Stehers 2, der den gleichen Querschnitt wie der Balken 1 aufweist. Auch hier sind an den vier Seitenflächen in Längsrichtung verlaufenden Nuten 5 vorgesehen. Im unteren Abschnitt des Stehers 2 ist ein Verbindungsbeschlag 4 in einer Seitenfläche versenkt angeordnet.

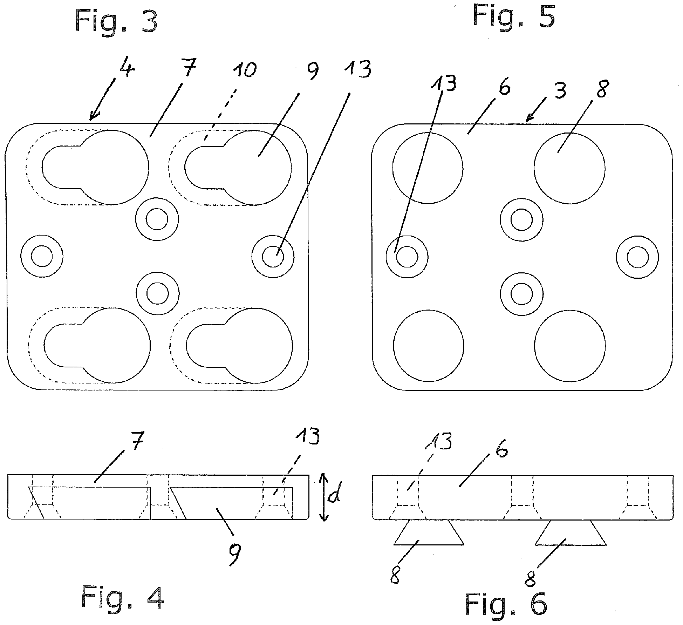

Die Fig. 3 und Fig. 4 zeigen einen ersten Verbindungsbeschlag 4 in größerem Detail und die Fig. 5 und Fig. 6 zeigen einen weiteren Verbindungsbeschlag 3 ebenfalls in größerem Detail.

Ein erstes Verbindungselement 4 besteht jeweils aus einer Grundplatte 7, die rechteckig ist und abgerundete Ecken aufweist. Auf dieser Grundplatte 7 sind vier schlüssellochförmige Aufnahmeelemente 9 in rechteckiger Anordnung vorgesehen. Die schlüssellochförmigen Aufnahmeelemente 9 besitzen jeweils einen hinterschnittenen Bereich 10, der Fortsätze ausbildet, in dem pilzförmige Eingriffselemente 8 eingerastet werden können.

Ein weiteres Verbindungselement 3 besteht ebenfalls aus einer Grundplatte 6. Dieser sind 4 pilzförmige Eingriffselemente 8 angeordnet, die jeweils im Wesentlichen kegelstumpfförmig ausgebildet sind.

Bei der hier dargestellten Ausführungsvariante ist an dem Steher 2 ein erstes Verbindungselement 4 mit schlüssellochförmigen Aufnahmeelementen 9 vorgesehen, während an dem Balken 1 ein weiteres Verbindungselement 3 mit pilzförmigen Eingriffselementen 8 angeordnet ist.

Beim Zusammenbau zu einem hier nicht näher dargestellten Bauwerk wird ein Steher 2 mit einer Stirnfläche 11 auf einer waagrechten Unterlage aufgestellt, so dass am unteren Ende ein erstes Verbindungselement 4 passend angeordnet ist. Ein Balken 1 wird mit einer Seitenfläche 12 auf die Unterlage aufgelegt, so dass ein weiteres Verbindungselement 3 an der Stirnfläche des Balkens 1 dem ersten Verbindungselement 4 des Stehers 2 gegenüberliegt. Wenn der Balken 1 leicht angehoben wird, können die pilzförmige Eingriffselemente 8 in die schlüssellochförmigen Aufnahmeelemente 9 eingeführt werden, da diese einen im Wesentlichen kreisförmigen Abschnitt besitzen, dessen Durchmesser geringfügig größer ist als der größte Durchmesser der pilzförmigen Eingriffselemente 8. Danach kann der Balken 1 abgesenkt werden, so dass die pilzförmigen Eingriffselemente 8 in den schlüssellochförmigen Aufnahmeelementen 9 verrastet werden. In diesem Zustand liegen sowohl die Stirnfläche 11 als auch die Seitenflächen 12 auf der Unterlage auf.

In gleicher Weise können am oberen Ende oder auch im mittleren Bereich jedes Stehers 2 Verbindungselemente 4 vorgesehen sein, um dort Balken 1 anbringen zu können, die dazu bestimmt sind, in einer bestimmten Höhe waagerecht zu verlaufen.

Je nach der gewünschten Struktur des Bauwerks ist es natürlich möglich, an mehreren Seitenflächen eines Stehers 2 Verbindungselemente 4 anzubringen, um Balken 1 anschließen zu können, die in verschiedene Richtungen verlaufen. Auf diese Weise können rahmenartige Strukturen dargestellt werden.

Bei der dargestellten Ausführungsvariante sichert das Eigengewicht jedes Balkens 1 die Verrastung der Verbindungselemente 3, 4, da die Verbindung nur durch Anheben des Balkens 1 gelöst werden kann. Dies steht damit im Zusammenhang, dass die Aufnahmeelemente 9 in Gebrauchslage schlüssellochförmig orientiert sind, d.h., dass der kreisförmige Abschnitt oben ist.

Es ist alternativ möglich, am Steher 2 Verbindungselemente mit pilzförmigen Eingriffselementen 8 anzubringen. In diesem Fall ist es sinnvoll, am Balken 1 die Aufnahmeelemente 9 in Gebrauchslage umgekehrt schlüssellochförmig vorzusehen, d.h., dass der kreisförmige Abschnitt unten ist. Auch in diesem Fall sichert das Eigengewicht jedes Balkens 1 die Verrastung der Verbindungselemente 3, 4.

Schraubbohrungen 15 dienen zur zusätzlichen Befestigung der Verbindungselemente 3, 4.

## Patentansprüche

1. Bauwerk, bestehend aus modular zusammensetzbaren Bauteilen, mit Stehern (2) und Balken (1), die lösbar miteinander verbindbar sind, wobei an den Stehern (2) und an den Balken (1) Verbindungsbeschläge (3, 4) mit einer Halteplatte (6, 7) angeordnet sind, auf der einerseits pilzförmige Eingriffselemente (8) und andererseits schlüssellochförmige Aufnahmeelemente (9) vorgesehen sind, wobei eine erste Halteplatte (7) versenkt an einem Steher (2) und eine weitere Halteplatte (6) versenkt an einem Balken (1) angeordnet sind, um den Steher (2) mit dem Balken (1) zu verbinden, **dadurch gekennzeichnet, dass** die Steher (2) und/oder die Balken (1) an Seitenflächen Längsnuten (5) mit einer Tiefe (t) aufweisen, die der Dicke (d) der Halteplatte (6, 7) entspricht.

2. Bauwerk nach Anspruch 1, **dadurch gekennzeichnet, dass** an einer Halteplatte (6) vier Eingriffselemente (8) in rechteckiger Anordnung vorgesehen sind.

3. Bauwerk nach einem der Ansprüche 1 oder 2, **dadurch gekennzeichnet, dass** an dem Steher (2) eine Halteplatte mit Eingriffselementen (8) und an dem Balken (1) eine Halteplatte mit Aufnahmeelementen (9) angebracht ist, wobei die Aufnahmeelemente (9) in Gebrauchsstellung umgekehrt schlüssellochförmig orientiert sind.

4. Bauwerk nach einem der Ansprüche 1 oder 2, **dadurch gekennzeichnet, dass** an dem Steher (2) eine Halteplatte (7) mit Aufnahmeelementen (9) und an dem Balken (1) eine Halteplatte (6) mit Eingriffselementen (8) angebracht ist, wobei die Aufnahmeelemente (9) in Gebrauchsstellung schlüssellochförmig orientiert sind.

5. Bauwerk nach einem der Ansprüche 1 bis 4, **dadurch gekennzeichnet, dass** die Halteplatte (6, 7) allseitig am Grundmaterial des Stehers (2) bzw. Balkens (1) anliegt.

6. Bauwerk nach einem der Ansprüche 1 bis 5, **dadurch gekennzeichnet, dass** dass das Grundmaterial der Steher (2) und/oder der Balken (1) Holz ist.

7. Verfahren zur Herstellung eines Bauwerks, bei dem Balken (1) und Steher (2) durch Einrasten von Verbindungsbeschlägen (3, 4) miteinander verbunden werden, um Messestände oder zerlegbare Bauwerke herzustellen, wobei die Verbindungsbeschläge (3, 4) jeweils eine Halteplatte (6, 7) aufweisen, auf der einerseits pilzförmige Eingriffselemente (8) und andererseits schlüssellochförmige Aufnahmeelemente (9) vorgesehen sind, wobei zunächst ein Steher (2) bereitgestellt wird, an den ein Balken (1) in leicht erhöhter Lage an den Steher (2) angelegt werden, wonach die Eingriffselemente (8) des Stehers (2) in die Aufnahmeelemente (9) des Balkens (1) eingeführt werden, wonach der Balken (1) in seine gewünschte Position abgesenkt wird, so dass die Eingriffselemente (8) durch Fortsätze festgelegt werden, **dadurch gekennzeichnet, dass** die Balken (1) und die Steher (2) an ihren Seitenflächen Längsnuten (5) mit einer Tiefe (t) aufweisen, die der Dicke (d) der Halteplatte (6, 7) entspricht, und dass die Balken (1) und Steher (2) so zusammengefügt werden, dass ihre Längsnuten (5) aneinander anschließen.

8. Verfahren nach Anspruch 7, **dadurch gekennzeichnet, dass** in die Längsnuten (5) Leitungen und/oder Lichtelemente verlegt werden.

9. Verfahren nach einem der Ansprüche 7 oder 8, **dadurch gekennzeichnet, dass** die Längsnuten (5) gemeinsam mit der Aufnahme für die Halteplatte (6, 7) beispielsweise in einem Fräsvorgang hergestellt werden.

## Claims

1. Structure consisting of components which can be assembled in a modular manner, comprising uprights (2) and beams (1) which can be detachably connected to one another, wherein connecting fittings (3, 4) having a retaining plate (6, 7) are arranged on the uprights (2) and on the beams (1), on which retaining plate (6, 7) mushroom-shaped engagement elements (8) are provided on the one hand and keyhole-shaped receiving elements (9) on the other hand, wherein a first retaining plate (7) is arranged in a countersunk manner on an upright (2) and a further retaining plate (6) is arranged in a countersunk manner on a beam (1) in order to connect the upright (2) to the beam (1), **characterised in that** the uprights (2) and/or the beams (1) have longitudinal grooves (5) on side faces with a depth (t) corresponding to the thickness (d) of the retaining plate (6, 7).

2. Structure according to claim 1, **characterised in that** four engagement elements (8) are provided on a retaining plate (6) in a rectangular arrangement.

3. Structure according to one of claims 1 or 2, **characterised in that** a retaining plate with engagement elements (8) is attached to the upright (2) and a retaining plate with receiving elements (9) is attached to the beam (1), wherein the receiving elements (9) are oriented in an inverted keyhole shape in the position of use.

4. Structure according to one of claims 1 or 2, **characterised in that** a retaining plate (7) with receiving elements (9) is attached to the upright (2) and a retaining plate (6) with engaging elements (8) is attached to the beam (1), wherein the receiving elements (9) are oriented in the form of keyholes in the position of use.

5. Structure according to one of the claims 1 to 4, **characterised in that** the retaining plate (6, 7) rests on all sides against the base material of the upright (2) or beam (1).

6. Structure according to one of the claims 1 to 5, **characterised in that** the base material of the upright (2) and/or the beam (1) is wood.

7. Method for producing a structure, in which beams (1) and uprights (2) are connected to one another by latching connecting fittings (3, 4) to each other in order to produce exhibition stands or demountable structures, wherein the connecting fittings (3, 4) each comprise a retaining plate (6, 7) on which mushroom-shaped engagement elements (8) are provided on the one hand and keyhole-shaped receiving elements (9) are provided on the other hand, wherein at first an upright (2) is provided against which a beam (1) is placed in a slightly raised position against the upright (2), whereupon the engagement elements (8) of the upright (2) are inserted into the receiving elements (9) of the beam (1), whereupon the beam (1) is lowered into its desired position so that the engagement elements (8) are fixed by projections, **characterised in that** the beams (1) and the uprights (2) have longitudinal grooves (5) on their side faces with a depth (t) corresponding to the thickness (d) of the retaining plate (6, 7), and **in that** the beams (1) and uprights (2) are joined together so that their longitudinal grooves (5) adjoin each other.

8. Method according to claim 7, **characterised in that** lines and/or lighting elements are laid in the longitudinal grooves (5).

9. Method according to one of claims 7 or 8, **characterised in that** the longitudinal grooves (5) are produced together with the receptacle for the retaining plate (6, 7), for example in a milling process.

## Revendications

1. Construction composée de composants modulaires, assemblables, comprenant des montants (2) et des poutres (1) reliés de manière démontable,
- les montants (1) et les poutres (2) ayant des ferrures de liaison (3, 4) munies d'une plaque de fixation (6, 7) ayant d'un côté des éléments de prise (8), en forme de champignon et de l'autre côté des éléments récepteurs (9) en forme de trou de serrure,
- une première plaque de fixation (7) étant prévue de façon encastrée dans un montant (2) et une autre plaque de fixation (6) étant prévue de façon encastrée dans une poutre (1),
construction **caractérisée en ce que**
- les montants (2) et/ou les poutres (1) ont des rainures longitudinales (5) sur leur face latérale, dont la profondeur (t) correspond à l'épaisseur (d) des plaques de fixation (6, 7).

2. Construction selon la revendication 1,
**caractérisée en ce que**
une plaque de fixation (6) comporte quatre éléments de prise (8) selon une disposition rectangulaire.

3. Construction selon l'une des revendications 1 ou 2,
**caractérisée en ce que**
le montant (2) comporte une plaque de fixation avec des éléments de prise (8) et la poutre (1) comporte une plaque de fixation avec des éléments récepteurs (9),
- les éléments récepteurs (9) étant orientés en position d'utilisation, à l'inverse de la forme de trou de serrure.

4. Construction selon l'une des revendications 1 ou 2,
**caractérisée en ce que**
le montant (2) comporte une plaque de fixation (7) munie d'éléments récepteurs (9) et la poutre (1) comporte une plaque de fixation (6) avec des éléments de prise (8),
- les éléments récepteurs (9) étant orientés en forme de trou de serrure en position d'utilisation.

5. Construction selon l'une des revendications 1 à 4,
**caractérisée en ce que**
la plaque de fixation (6, 7) s'applique de tous côtés contre le matériau de base du montant (2) ou de la poutre (1).

6. Construction selon l'une des revendications 1 à 5,
**caractérisée en ce que**
le matériau de base du montant (2) et/ou de la poutre (1) est le bois.

7. Procédé de réalisation d'une construction selon lequel on relie la poutre (1) et le montant (2) par l'accrochage de ferrures de liaison (3, 4), pour réaliser des stands d'exposition ou des constructions démontables,
- les ferrures de liaison (3, 4) ayant chacune une plaque de fixation (6, 7) munie d'un côté d'éléments de prise (8) en forme de champignon et de l'autre côté d'éléments récepteurs (9) en forme de trou de serrure, procédé selon lequel
tout d'abord on fournit un montant (2) contre lequel on applique une poutre (1) dans une position légèrement relevée sur le montant (2), puis on introduit les éléments de prise (8) du montant (2) dans les éléments récepteurs (9) de la poutre (1),
ensuite on abaisse la poutre (1) dans sa position souhaitée pour que les éléments de prise (8) soient retenus par des prolongements,
procédé **caractérisé en ce que**
les poutres (1) et les montants (2) ont dans leurs surfaces latérales, des rainures longitudinales (5) d'une profondeur (t) correspondant à l'épaisseur (d) de la plaque de fixation (6, 7), et
les poutres (1) et les montants (2) sont assemblés pour que leurs rainures longitudinale (5) se rejoignent.

8. Procédé selon la revendication 7,
**caractérisé en ce que**
on installe des câbles et/ou des éléments lumineux dans les rainures longitudinales (5).

9. Procédé selon l'une des revendications 7 ou 8,
**caractérisée en ce que**
les rainures longitudinales (5) sont réalisées en commun avec les logements de la plaque de fixation (6, 7), par exemple, par une opération de fraisage.
